# EUROPÄISCHE PATENTSCHRIFT

(11) **EP 0 696 836 B1**
(45) Veröffentlichungstag und Bekanntmachung des Hinweises auf die Patenterteilung: **15.03.2000**
(21) Anmeldenummer: 95110457.9
(22) Anmeldetag: 05.07.1995
(51) Int. Cl.: H02K 37/12, H02K 37/14

(54) **Elektromagnetischer Schrittmotor mit zwei Drehrichtungen**
Electromagnetic stepping motor with two directions of rotation
Moteur électromagnétique pas à pas à deux sens de rotation

(30) Priorität: 10.08.1994 DE 4428243
(43) Veröffentlichungstag der Anmeldung: 14.02.1996
(73) Patentinhaber: Haller, Eckhart W., D-78112 St.Georgen (DE); Stoll-Haller, Doris, 78112 St. Georgen (DE)
(72) Erfinder: Stechmann, Helmut, D-78056 Villingen-Schwenningen (DE)
(74) Vertreter: Patentanwälte Westphal, Mussgnug & Partner

(56) Entgegenhaltungen:
- WO-A-85/00704
- US-A- 5 068 562
- PATENT ABSTRACTS OF JAPAN vol. 004 no. 175 (E-036) ,3.Dezember 1980 & JP-A-55 122471 (NIPPON DENSO CO LTD) 20.September 1980,

## Beschreibung

Die vorliegende Erfindung betrifft ein Verfahren zur Ansteuerung eines elektromagnetischen, zweiphasigen Schrittmotors entsprechend dem Oberbegriff des Patentanspruchs.

Ein derart angesteuerter Schrittmotor ist aus US-A-5 068 562 bekannt.

Zur Weiterschaltung des Rotors werden bei diesem Motor die das Drehfeld erzeugenden Magnetspulen mit Stromimpulsen gleicher und/oder entgegengesetzter Polarität bestromt. Bei dieser Ansteuerung wird der Rotor in Winkelschritten von 45° weitergeschaltet, so daß eine Volldrehung von 360° in acht Einzelschritte unterteilt ist. Falls eine weitere Untersetzung wie z. B. beim Antrieb von Zeitmeßinstrumenten, notwendig ist, ist der Einsatz von Untersetzungsgetrieben erforderlich. Derartige Getriebe führen zu einer Verteuerung des Antriebs und zu einer Vergrößerung der Abmessungen, was insbesondere bei Verwendung dieses Antriebs für flache, preisgünstige Uhren nachteilig ist.

Der Erfindung liegt darum die Aufgabe zugrunde, ein Verfahren zum Betrieb eines elektromagnetischen, zweiphasigen Schrittmotors vorzuschlagen, bei welchem die das Drehfeld erzeugenden Magnetspulen so angesteuert werden, daß sich kleinere Winkelschritte ohne Erhöhung des mechanischen Aufwandes ergeben.

Gelöst wird diese Aufgabe gemäß vorliegender Erfindung mit dem Ansteuerverfahren nach dem Patentanspruch.

Hiernach werden die Magnetspulen nicht nur, wie bekannt, mit Stromimpulsen gleicher und/oder entgegengesetzter Polarität bestromt, sondern auch derart angesteuert, daß nur eine Magnetspule bestromt und die andere stromlos ist. Durch diese einfache Maßnahme lassen sich die Rotorwinkelschritte von 45° halbieren, also in Winkelschritte von zweimal 22,5° unterteilen. Hierdurch wird die Volldrehung von 360° in sechszehn Einzelschritte unterteilt.

Bei Verwendung eines derart betriebenen Schrittmotors zum Antrieb von analogen Zeigeruhren lassen sich in sehr wirtschaftlicher Weise Uhren, vor allem Anmbanduhren, kleiner Abmessungen und vor allem in flacher Bauform produzieren.

Ein weiterer, insbesondere für analoge Funkuhren wichtiger Vorteil ist, daß mit nur einem Schrittmotor alle Zeiger mit hoher Drehgeschwindigkeit bei großer Stellgenauigkeit eingestellt werden können.

Erfindungsgemäß betriebene Schrittmotoren sind auch zum Antrieb analoger Kraftfahrzeuganzeigeinstrumente geeignet, bei welchen digitale Meßwerte in analoge Anzeigen umzusetzen sind.

Die Erfindung ist nachstehend anhand der in den Zeichnungen dargestellten Ausführungsbeispiele von nach dem erfindungsgemäßen Verfahren arbeitenden Schrittmotoren näher erläutert.

Figur 1 bis 4 zeigen schematisch die Ausführungsform derartiger Motoren.

Figur 5 und 6 veranschaulichen mit dem Diagramm der Stromimpulse die Arbeitsweise des Motors.

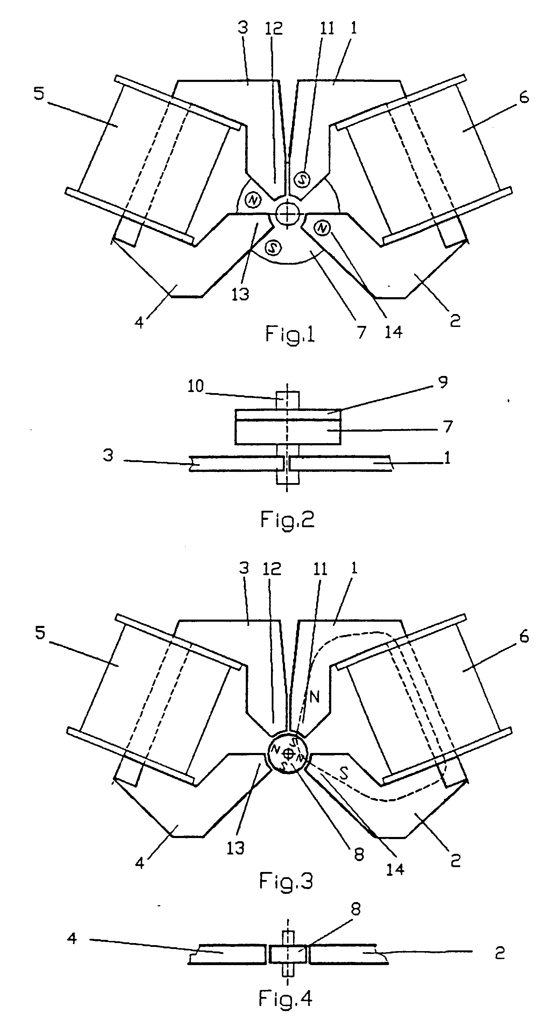

Figur 1 zeigt den Motor mit den jeweils zwei gleichförmigen Statorblechen (1, 3) und (2, 4) aus weichmagnetischen Werkstoffen. Die Statorbleche (1, 2) und (3, 4) bilden mit den Erregerspulen (5, 6) zwei getrennte Magnetkreise.

Zur Erzielung einer geringen Bautiefe ist bei dem verwendeten Schrittmotorsystem zu vermeiden, daß sich Magnetkreise (Statorbleche) kreuzen. Um dies zu erreichen, bilden die beiden Eisenkreise (1, 2) und (3, 4) mit ihren jeweils zwei Statorpolen (11, 14) und (12, 13) eine Winkel von 90° in Bezug auf das Zentrum des vierpoligen Rotors. Die beiden Eisenkreise sind so zueinander angeordnet, daß jeweils ein Eisenkreis mit seinen zwei Statorpolen zwei Pole (N und S) des Rotors beaufschlagt, während das andere Statorpolpaar neutrale Zonen des Rotors beaufschlagt.

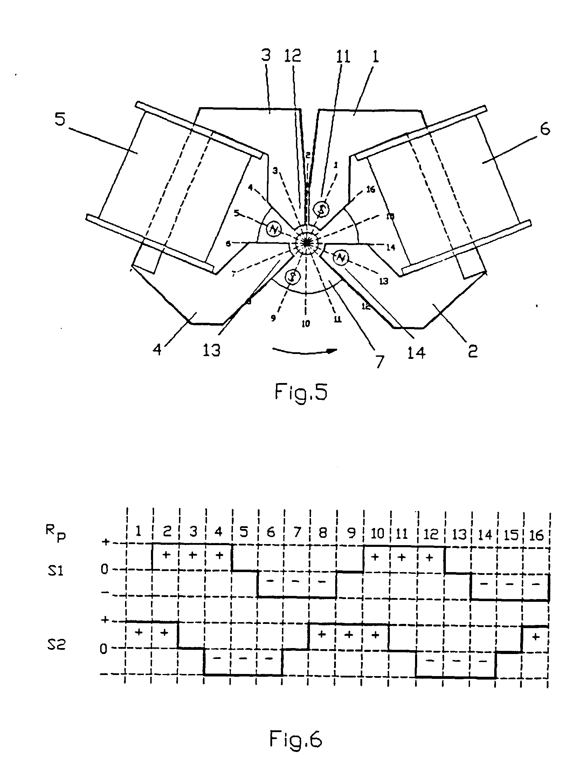

Mit der in Figur 6 veranschaulichten Bestromung kann ein Drehfeld erzeugt werden, das den Rotor in eine definierte Drehbewegung versetzt. In Fig. 6 sind mit S1 die Steuersignale an Spule (5) und mit S2 die Steuersignale an Spule (6) dargestellt. Wird z. B. die Spule (6) so bestromt, daß an dem Statorpol (11) ein Nordpol und an Stator (14) ein Südpol entsteht, so nimmt der Rotor (7) bzw. (8) die Position Rp 1 nach Figur 5 ein. Wird danach auch die Spule (5) bestromt. so nimmt der Rotor die Position Rp 2 ein.

Wird danach gemäß der Erfindung nur die Spule (5) bestromt und die Spule (6) abgeschaltet, so bewegt sich der Rotor in die Position Rp 3 usw. Das so erzeugte Drehfeld gemäß Figur 6 führt zu Schrittwinkeln von 22, 5°, also zu sechszehn Schritten pro Rotorumdrehung (siehe Figur 5).

Nach dem Diagramm gemäß Figur 6 dreht sich der Rotor links herum. Bei einer Umkehr dieser Bestromung um 180° läuft der Rotor in entgegengesetzter Richtung.

In Figur 1 und 2 ist ein scheibenförmiger Rotor (7) versehen mit einem Rückschlußblech (9) dargestellt. Der Rotor (7) ist mit der Welle (10) zentrisch zu den Statorpolpaaren (11, 14) und (12, 13) gelagert. Mit der seitlichen Anordnung des scheibenförmigen Rotors (7) treten die Feldlinien senkrecht zur Statorblechebene aus.

Nach einer weiteren Ausführungsvariante, dargestellt in Figur 3 und 4, ist ein radial magnetisierter vierpoliger Rotor (8) vorgesehen. Ein radialmagnetisierter Rotor (8) besitzt ein kleineres Trägheitsmoment und ist für bestimmte Anwendungsfälle, bei welchen es auf eine große Dynamik ankommt, von Vorteil.

## Patentansprüche

1. Verfahren zur Ansteuerung eines elektromagnetischen, zweiphasigen Schrittmotors bestehend aus einem scheibenförmigen Permanentmagnet-Rotor (7), der vier um 90° gegeneinander versetzte Pole (N, S) wechselnder Polarität aufweist, aus zwei Magnetspulen (5, 6), die jweils über zwei Statorbleche (1, 2 und 3, 4) magnetisch mit dem Rotor gekoppelt sind und jeweils einen Magnetkreis bilden, wobei alle Statorpole (11, 12, 13, 14) in einer Ebene angeordnet sind und die Statorpole (11, 14 und 12, 13) jedes Magnetkreises in Bezug auf das Zentrum des Rotors (7) jeweils einen Winkel von 90° einschließen, und die Statorpole (11, 14; 12, 13) derart gegeneinander versetzt sind, daß zwei Statorpole (11, 12) der beiden Statorpolpaare (11, 14; 12, 13) unmittelbar benachbart sind und deren Mittellinien um einen Winkel von 45° zueinander versetzt sind, wobei ferner ein Drehfeld erzeugende Magnetspulen (5, 6) mit Stromimpulsen gleicher und/oder entgegengesetzter Polarität bestromt werden, derart daß der Rotor (7) in 45°-Schritten je nach Impulsfolge in beiden Drehrichtungen weiterschaltbar ist, dadurch gekennzeichnet, daß zur Erzeugung von Winkelschritten von 22,5° jweils nur eine Magnetspule (5, 6) bestromt ist, während die andere stromlos ist.

## Claims

1. A method for actuating an electromagnetic, two-phase stepping motor consisting of a disk-shaped permanent magnetic rotor (7) having four poles (N, S) of alternating polarity offset in relation to one another, of two magnet coils (5, 6), each of which is magnetically coupled with the rotor via two stator plates (1, 2 and 3, 4) and each forms a magnetic circuit, whereby all stator poles (11, 12, 13, 14) are disposed in one plane and the stator poles (11, 14 and 12, 13) of each magnetic circuit enclose an angle of 90° with respect to the centre of the rotor (7), and the stator poles (11, 14; 12, 13) are offset in relation to one another in such a manner that two stator poles (11, 12) of the two pairs of stator poles (11, 14; 12, 13) are directly adjacent and their centre lines are offset in relation to one another by an angle of 45°, whereby moreover magnet coils (5, 6) generating a rotating field are energised with current pulses of equal and/or reverse polarity in such a manner that the rotor (7) can be indexed in 45° increments in both directions of rotation depending on the pulse sequence,
**characterised in that** to produce angular increments of 22.5° only one magnet coil (5, 6) is energised, while the other is current-free.

## Revendications

1. Procédé servant à commander un moteur électromagnétique, pas à pas, diphasé, se composant d'un rotor à aimant permanent (7) en forme de disque qui présente quatre pôles (N,S) décalés les uns par rapport aux autres de 90°, de polarités alternées, de deux bobines magnétiques (5, 6) chacune couplée magnétiquement au rotor au moyen de deux tôles de stator (1, 2 et 3, 4) et formant respectivement un circuit magnétique, tous les pôles du stator (11, 12, 13, 14) étant disposés dans un seul plan et les pôles du stator (11, 14, et 12, 13) de chaque circuit magnétique formant respectivement un angle de 90° par rapport au centre du rotor (7), et les pôles du stator (11, 14 ; 12, 13) étant décalés les uns par rapport aux autres d'une manière telle que deux pôles du stator (11, 12) des deux paires de pôles du stator (11, 14; 12, 13) soient directement voisines et que leurs médianes soient décalées l'une par rapport à l'autre d'un angle de 45°, alors qu'en outre des bobines magnétiques (5, 6) qui produisent un champ tournant, sont alimentées par des impulsions de courant de même polarités et/ou de polarités opposées, d'une manière telle que l'on puisse faire avancer le rotor (7) selon des pas de 45° respectivement après chaque série d'impulsions dans les deux sens de rotation,
caractérisé en ce que
pour produire des pas angulaires de 22,5° on alimente une seule bobine magnétique (5, 6), tandis que l'autre est sans courant.
